# EUROPEAN PATENT SPECIFICATION

(11) **EP 2 288 516 B1**
(45) Date of publication and mention of the grant of the patent: **02.04.2014**
(21) Application number: 09761527.2
(22) Date of filing: 09.02.2009
(51) Int. Cl.: B60N 5/00, E06B 11/08

(54) **CONTROL BARRIER FOR ACCESS OF ONE USER AT A TIME, MAINLY FOR MEANS OF PUBLIC TRANSPORTATION SUCH AS BUSES, TRAMS AND THE LIKE**
KONTROLLBARRIERE FÜR DEN EINZELZUGANG VON BENUTZERN, HAUPTSÄCHLICH FÜR ÖFFENTLICHE TRANSPORTMITTEL, WIE ZUM BEISPIEL BUSSE, STARASSENBAHNEN UND DERGLEICHEN
BARRIÈRE DE COMMANDE PERMETTANT L ACCÈS D UN UTILISATEUR À LA FOIS ET PRINCIPALEMENT DESTINÉE À DES MOYENS DE TRANSPORT PUBLICS TELS QUE LES BUS, LES TRAMWAYS ET SIMILAIRES

(30) Priority: 13.06.2008 IT AR20080024
(43) Date of publication of application: 02.03.2011
(73) Proprietor: Saima S.p.a., 52100 Arezzo (IT)
(72) Inventor: RINALDI, Rinaldo, I-52100 Arezzo (IT)
(74) Representative: Olivieri, Antonella
(86) International application number: PCT/EP2009/051419
(87) International publication number: WO 2009/149964

(56) References cited:
- DE-U1- 8 709 542
- DE-U1-202005 015 373
- FR-A- 2 534 963
- US-A- 6 141 908

## Description

### Technical Field

The present invention relates to a control barrier for access of one person at a time, mainly for means of public transportation such as buses, trams and the like.

### Background Art

Control barriers for the passage of one user at a time are known and are visible in many accesses to subways, stadiums, ascent facilities for skiers, et cetera.

Access can occur for example by validating a ticket or optically reading a chip or is free and the device only has a people counting or flow steadying function.

These known devices are shaped like a tripod that rotates about an axis that is substantially parallel to the ground and allows the access of a single user at a time because it is shaped so that the space between two contiguous bars of the tripod is sufficient for the passage of one person only.

These types of barrier, also know as turnstiles, have however a very rigid structure and can cause access difficulties to people carrying luggage, large-bodied people, or the handicapped.

Further, they can cause severe problems for the safety of passengers in the case of sharp maneuvers or sudden braking of the public vehicle. Moreover, in case of emergency they constitute a severe safety problem indeed because of the way they are structured, and in fact are installed if other emergency exit routes exist.

For this reason, they are scarcely used in buses, trolleybuses, city buses and other means of public transportation.

Other types of device for controlling the access of one person at a time are also used which comprise one or two rotating arms (also known as swing gates) and are adapted to be used as an exit route in case of emergency.

This type of device is present for example in the entrances of roadside catering facilities (known by the trademark Autogrill) or in supermarkets.

However, barriers of this kind have substantial dimensions and therefore cannot be used in accesses with limited space, such as for example inside buses or trams, where the entrances and the transit corridors have a width of approximately 80-90 centimeters which is regulated by the law.

Further, in devices of this type the access time increases considerably due to the return stroke that the swing gate is forced to perform after each access of the user, with consequent drawbacks for users and with the risk that the passage of several people at once might be possible. For these reasons, such barriers are not deemed adapted to be installed in public transportation lines.

Barriers with panels that can slide on a plane that is normal to the floor are known. This kind of barrier, which is very expensive, however does not allow simple and straightforward exit forcing, with all the consequent problems, which can constitute a source of risk in the case of sharp braking.

There are also other types of known device which provide for access controlled by a bar, barrier and the like. Devices of this type, which have very simple operation, however have evident problems of space occupation and are not a good deterrent for any users not entitled to pass who nonetheless wish to gain access. Further, due to the mechanism of its operation, a barrier of this kind is not used in means of public transportation, since it has many risks during its normal operation, is very slow to remove and is dangerous in case of emergency.

DE 20 2005 015 373 shows a control barrier with a body and a control arm which is pivoted on the body.

FR-A-2 534 963 discloses a barrier opposing the simultaneous passage of several persons, comprising two pivoting gates each articulated about a vertical axis to a formwork of a corridor. In the normal position a first gate blocks the corridor while the other second gate is folded against the formwork. When the first gate is rotated by a first user to open the corridor, the second gate rotate at a higher speed to quickly close the corridor and prevent a second user to fraudulently pass through the corridor behind the first user.

### Disclosure of the Invention

The aim of the present invention is to eliminate the above-mentioned drawbacks of known types of barrier for controlling the access of one person at a time, which allows the passage of one and only one passenger at a time, acts as a deterrent for users not entitled to pass, and ensures maximum safety in case of panic or in emergency situations.

Within this aim, an object of the invention is to provide a barrier that allows users in difficulty, such as for example large-bodied individuals, or people with bulky baggage, or handicapped people, to achieve easy access independently.

Another object of the invention is to provide a barrier for controlling the access of one person at a time that can be installed in small spaces or arranged in places that have operating problems, such as buses, trams and other public vehicles.

Another object of the invention is to eliminate risks for the safety of users in case of sharp maneuvers and sudden braking, especially if the barrier is installed in buses, trams and other means of transportation.

Another object of the invention is to allow the device to be forced into a panic situation and to leave the passage free in case of emergency.

Another object of the invention is to act as a deterrent for any craftiness for example on the part of passengers who have no travel tickets and to not allow easy forcing in normal operation.

Another object of the invention is to provide a barrier for controlling the access of one person at a time with means that are easily commercially available and by using common materials, so that the device is economically competitive.

In accordance with the invention, there is provided a control barrier as defined in the appended claims.

### Brief description of the drawings

Further characteristics and advantages of the invention will become better apparent from the following detailed description of a preferred but not exclusive embodiment of the barrier for controlling the access of one person at a time, mainly for means of public transportation such as buses, trams and the like, illustrated by way of nonlimiting example in the accompanying drawings, wherein:

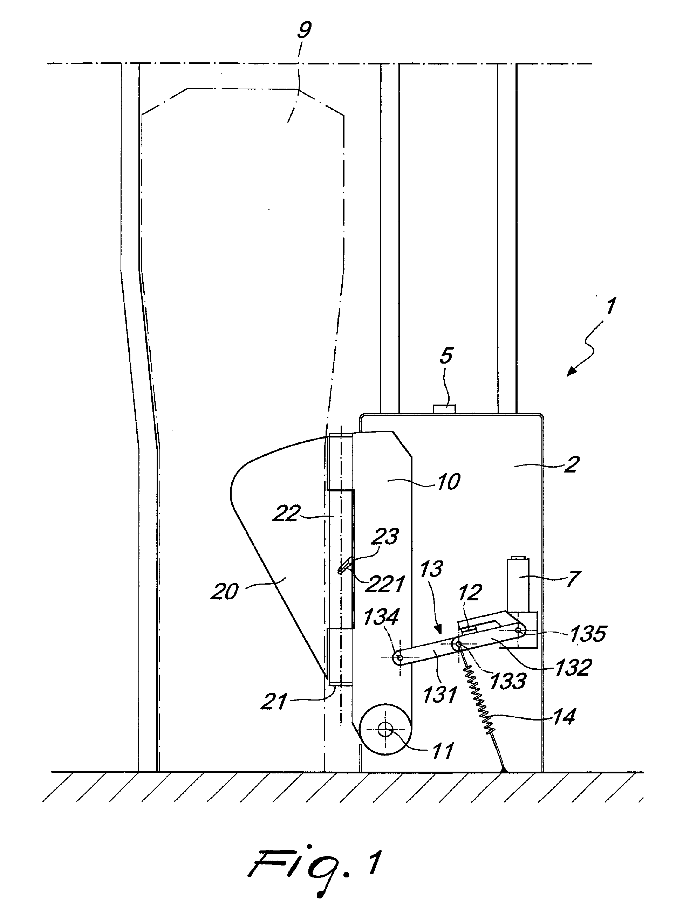

Figure 1 is a sectional view of a control barrier for the access of people, taken at right angles to the direction of transit of users, during the test performed with a reference outline of the Traffic Control Authority, in the position in which the barrier is closed;

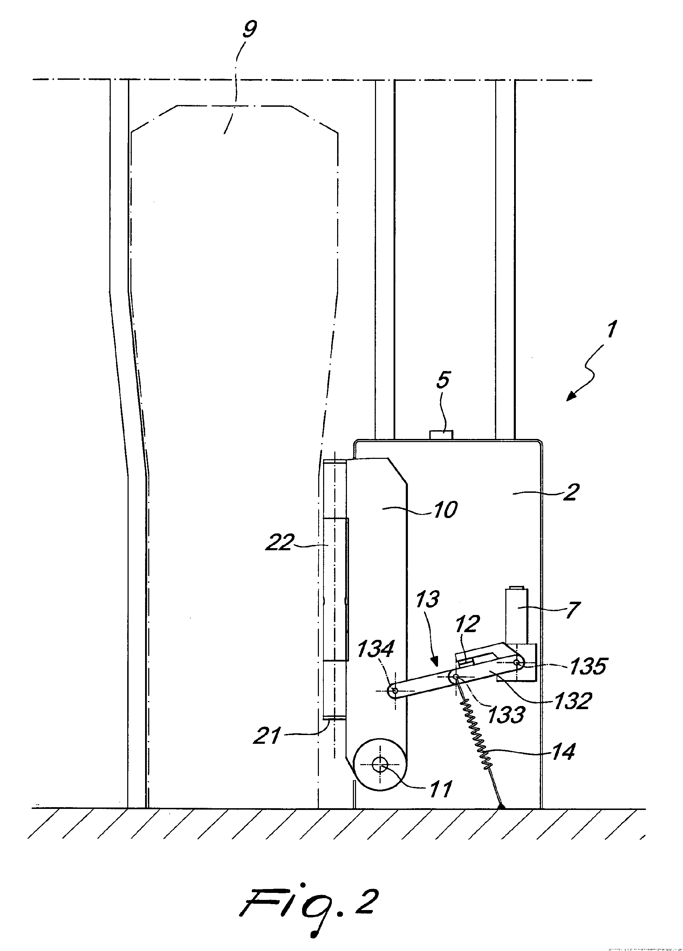

Figure 2 is a sectional view of a control barrier for the access of people, taken at right angles to the direction of transit of users, during the test performed with a reference outline by the Traffic Control Authority, in the position in which the barrier is closed, with the safety panel activated and rotated through 90° with respect to the initial position;

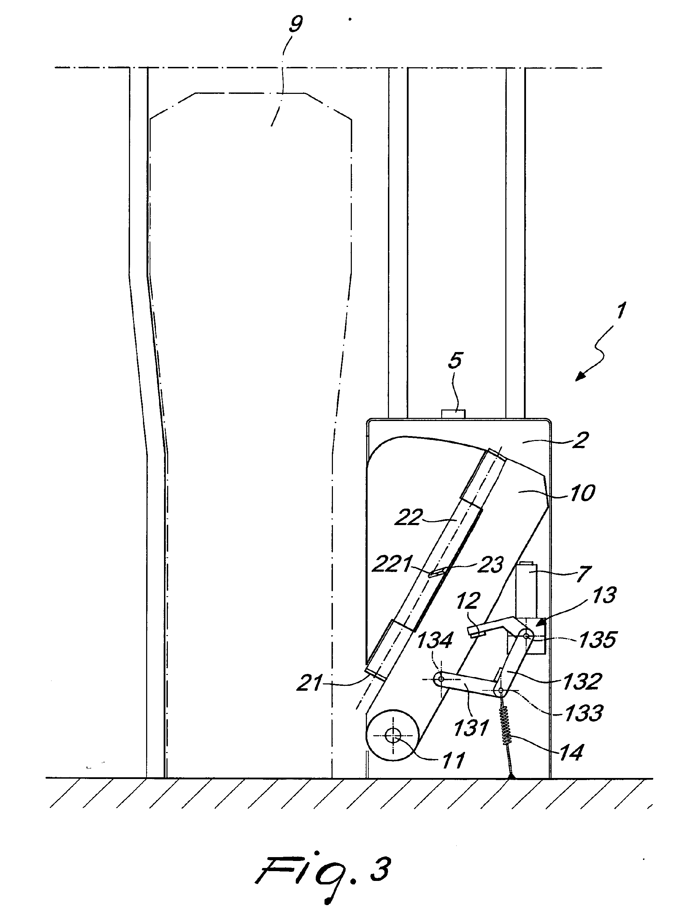

Figure 3 is a sectional view of a control barrier for the access of people, taken at right angles to the direction of transit of users, during the test performed with a reference outline by the Traffic Control Authority, in the position in which the barrier is open;

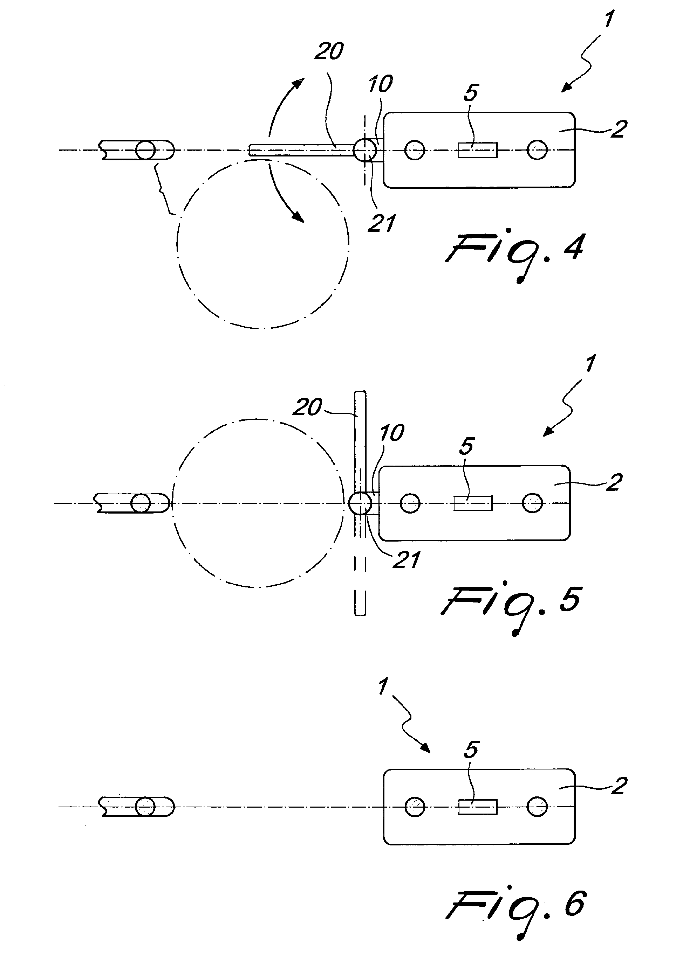

Figure 4 is a top view of a control barrier for the access of people, during the test performed with a reference outline by the Traffic Control Authority, in the position in which the barrier is closed;
Figure 5 is a top view of a control barrier for the access of people, during the test performed with a reference outline by the Traffic Control Authority, in the position in which the barrier is closed, with the safety wing activated and rotated through 90° with respect to the initial position;
Figure 6 is a top view of a control barrier for the access of people, during the test performed with a reference outline by the Traffic Control Authority, in the position in which the barrier is open;

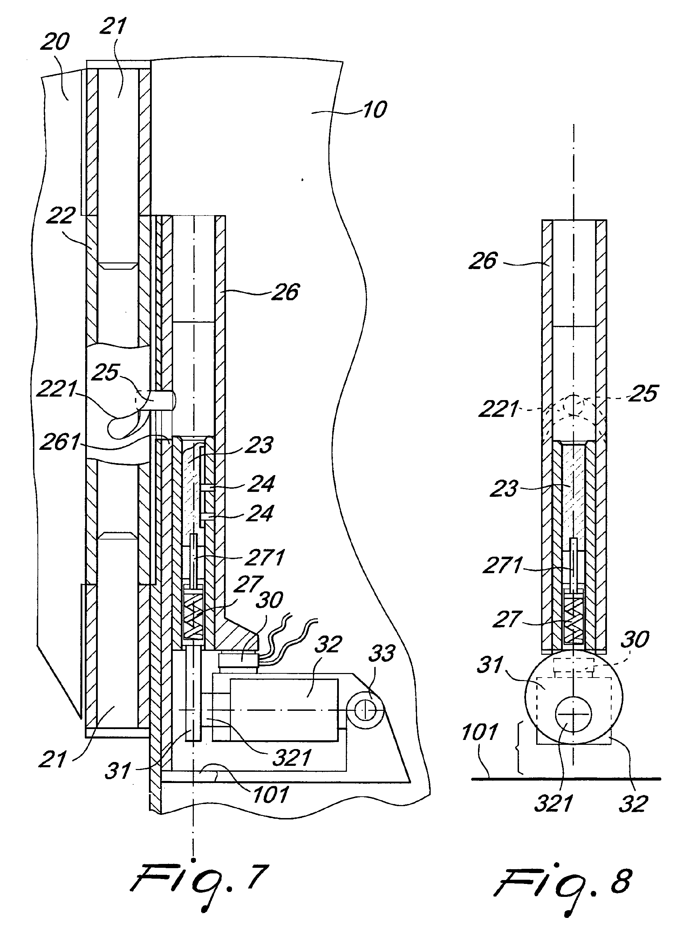

Figure 7 is a sectional view, taken parallel to the passage direction of the user, of a detail of the barrier which shows the rotation means, the means for controlling the rotation speed of the safety wing, and the emergency means, in the position for normal operation;
Figure 8 is a sectional view, taken at right angles to the passage direction of the user, of a detail of the barrier which shows the rotation means, the means for controlling the rotation speed of the safety wing, and the emergency means, in the position for normal operation;

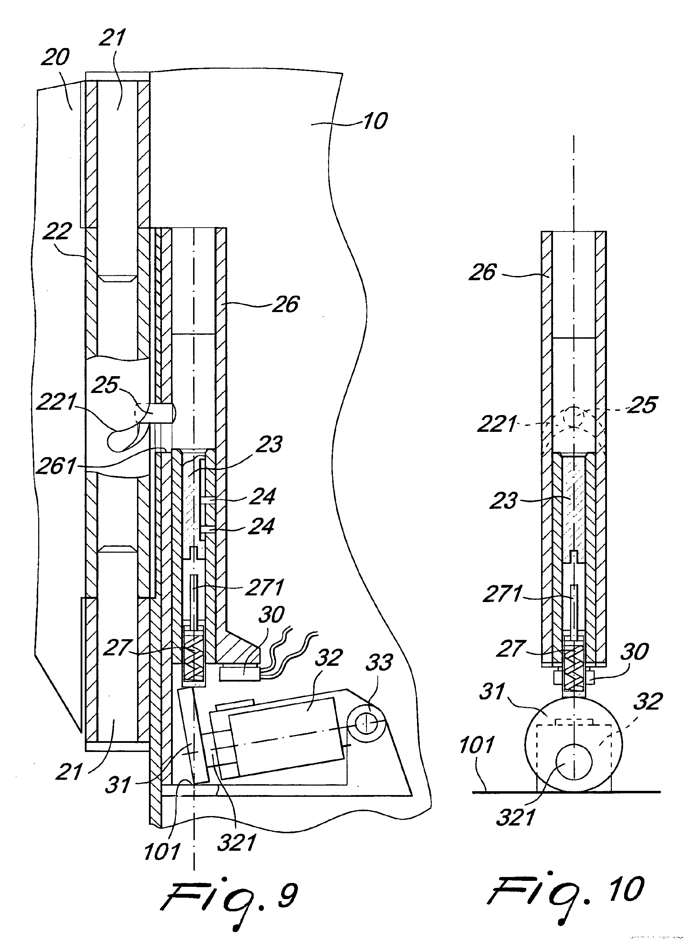

Figure 9 is a sectional view, taken parallel to the passage direction of the user, of a detail of the barrier, which shows the rotation means, the means for controlling the rotation speed of the safety wing, and the emergency means, in case of emergency;
Figure 10 is a sectional view, taken at right angles to the passage direction of the user, of a detail of the barrier, which shows the rotation means, the means for controlling the rotation speed of the safety wing, and the emergency means, in case of emergency.

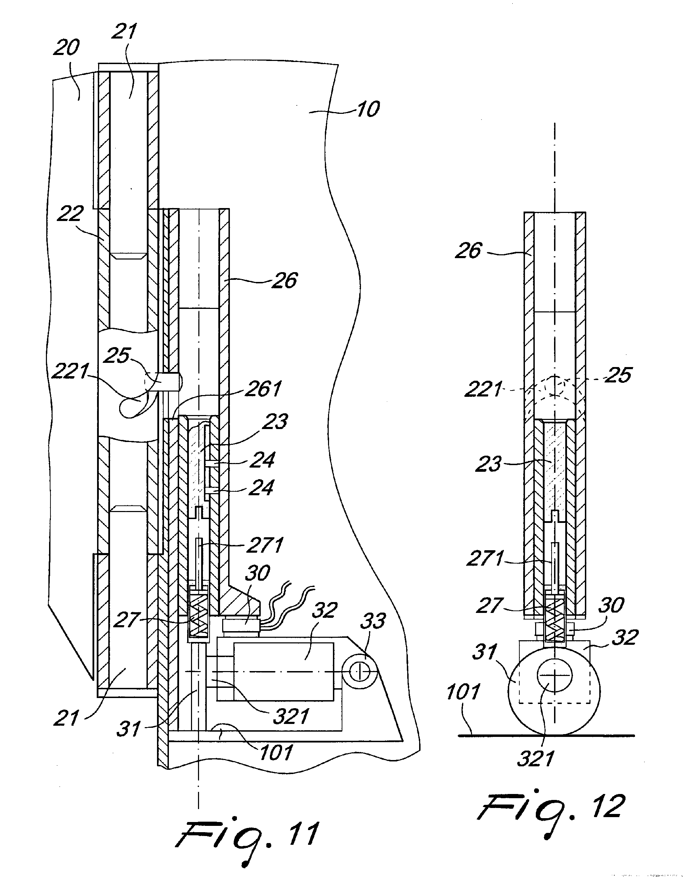

Figure 11 is a sectional view, taken parallel to the passage direction of the user, of a detail of the barrier, which shows the rotation means, the means for controlling the rotation speed of the safety wing, and the emergency means, when normal operation is restored;
Figure 12 is a sectional view, taken at right angles to the passage direction of the user, of a detail of the barrier, which shows the rotation means, the means for controlling the rotation speed of the safety wing, and the emergency means, when normal operation is restored.

### Ways of carrying out the Invention

With reference to the figures, a barrier for controlling the access of one person at a time, mainly for means of public transportation such as buses, trams and the like, according to the invention, generally designated by the reference numeral 1, comprises a supporting body 2 and a control arm 10 for accessing the barrier, which is pivoted on the body 2 and is connected to movement means.

One of the features of the control barrier according to the invention is that it is provided with a safety wing 20, which is connected to the arm 10 by way of means for rotation about an axis that is substantially vertical with respect to the ground, such rotation means being controlled by means for controlling the rotation speed of the wing 20.

The wing 20 allows the opening of the barrier 1 in case of a dangerous situation, such as for example a crowd within the means of transportation or a sharp braking action, and also ensures the accessibility of an outline 9, which is necessary in order to obtain a permit from the Traffic Control Authority.

In normal operation, the barrier 1 works in two positions: the closed position, with the control arm 10 that protrudes almost completely from the supporting body 2 so as to block access, and the open position, in which instead the arm 10 is contained inside the body 2.

The oscillation of the arm 10 occurs about a hinge 11, on which the arm 10 is pivoted and which is fixed to the supporting body 2.

The movement means comprise a first electromagnet 12, which retains a toggle 13 in the position in which the barrier is closed. The toggle 13 is constituted by two levers 131 and 132, which oscillate with respect to each other by means of a first pivot 133.

The lever 131 oscillate about the ann 10 by means of a second pivot 134, while the lever 132 rotates about the body 2 and is pivoted to a third pivot 135.

When the barrier 1 is in the closed position, and therefore the two levers 131 and 132 are substantially mutually aligned, forming a substantially straight angle about the first pivot 133, and the toggle 13 assumes an I-shaped configuration.

There are also return means for the toggle 13, which are connected to the supporting body 2, such as for example a traction spring 14, in which one end is fixed to the body 2 and the other end is fixed to the first pivot 133.

When the electromagnet 12 is deactivated, the two levers 131 and 132 are free to mutually oscillate and the return action of the spring 14 moves the barrier to the open position, i.e., the angle comprised between the two levers 131 and 132 becomes acute and the toggle 13 assumes a V-shaped configuration.

In this manner, when the user validates the ticket or in any case is entitled to enter the control area where the barrier 1 is located, validation means remove the power supply to the electromagnet 12 and the traction spring 14 applies its return action, drawing the control arm 10 into the body 2, allowing access to the user.

Preferably, at the sides of the barrier 1 there are two photocells, which prevent the blocking of the access as until the user has completed transit.

If instead the user is not authorized for access, the electromagnet 12 is not deactivated and the barrier I remains closed.

In situations of danger for the user, the safety wing 20 can rotate, leaving free a passage portion that is sufficient to allow access to a user.

When pressure or thrust is applied to one of the two surfaces of the wing 20, the wing 20 can rotate by means of a pair of pivots 21, which are associated with the arm 10 and act on a tubular element 22 that is jointly associated with the wing 20.

The rotary motion is transmitted to the wing by a pivot 25, which is supported by a slider 23 that protrudes from a slot 261 formed on a surface of a cylinder 26; the slider 23 can perform a translational motion within the cylinder 26, prevented from rotating by at least one pin 24 (in the embodiment described here, the pins are two).

The pivot 25 slides within a track 221 that is formed on the tubular element 22 and has such a shape as to form a sort of letter V on the flat extension of the outer surface of the tubular element 22.

When the wing 20 begins to rotate, the pivot 25 pushes the slider 23 downward, with the track 221 guiding it in its sliding.

The track 221 in fact is provided in such a manner that the rotation of the wing 20 is allowed in both directions, allowing a maximum opening of the wing 20 that is equal to 180°.

Advantageously, there are means for controlling the rotation speed of the wing 20, which intervene if the thrust applied to the wing 20 is lower than a certain preset threshold limit.

These control means comprise a fluid-operated spring 27 or any other actuator connected to the slider 23: when the slider 23 slides downward, engaging a piston 271 or similar means for actuating translational motion, it acts on the spring 27, which is compressed at a rate that is determined by a gas transfer, offering a proportional resistance to rotation.

Once the pressure or thrust on the wing 20 has ended, the spring 27 returns the elastic energy that is stored, pushing the slider 23 upward and returning the pivot 25 to the initial position.

Advantageously, if the pressure or thrust applied to the wing 20 exceed the limit set by design, or in dangerous conditions, emergency means intervene which allow to open the passage, allowing the free rotation of the wing 20.

These emergency means release the spring 27 from the mechanism for controlling the rotation speed, leaving the wing 20 free to rotate about the pair of pivots 21.

The mechanism comprises an eccentric disk 31, which in normal operating conditions supports the spring 27. The disk 31 is connected, by means of a driving shaft 321, to motor means, such as for example an electric motor 32. In turn, the motor 32 is pivoted to the arm 10 by means of a shaft 33, which is fixed on the arm 10.

During regular operation, the motor 32 and the disk 31 are retained in the operating position by a second electromagnet 30, which is jointly connected to the arm 10, or by other equivalent retention means.

Advantageously, there are means for deactivating the spring 27 that are intended to act on such retention means, leaving the wing 20 free to rotate about the pair of pivots 21.

In the embodiment described here, the deactivation means disconnect the electromagnet 30, turning by way of its own weight the motor 32 about the shaft 33: this rotation is interrupted by the contact of the disk 31 with a surface 101 of the arm 10.

The activation of these deactivation means occurs by means of an emergency button 5 or by means of a sensor that is arranged on the tubular element 22 or on the wing 20 and is capable of detecting the thrust applied to the surface of the wing 20.

To restore the normal operating situation, the motor 32 turns the disk 31, which by leveraging against the surface 101, with the first half-turn returns the motor 32 to a horizontal position by way of its eccentricity, thus allowing it to re-engage the electromagnet 30.

As it continues to rotate, during completion of the rotation, the disk 31 acts on the spring 27, which is reloaded and returned to the active position.

Advantageously, there are also emergency means, such as for example the button 5 or another emergency button, which, if operated, can deactivate the electromagnet 12.

If the button 5 activates the means for deactivating the spring 27 and at the same time acts as an emergency means, a single pressure on the button 5 causes a retraction of the arm 10 into a support 2, simultaneously leaving the wing 20 free.

Once the emergency has passed, in order to return the arm 10 to the initial position there are repositioning means, such as a gearmotor 7 that acts on the toggle 13: in the embodiment illustrated here, the gearmotor 7 acts on the pivot 134, rotating it so as to again position the first electromagnet 12 in the retention conditions, i.e., in the position for closing the barrier 1, and thus returning the toggle 13 to the I-shaped configuration. The irreversibility of the gearmotor 7 keeps the control arm constantly in the closed position.

From what has been described it is therefore evident that the invention achieves the proposed aim and objects, and in particular the fact is stressed that a barrier for controlling the access of one person at a time, mainly for public means of transportation such as buses, trams and the like, is provided which allows controlled passage in tight or small spaces and acts as a deterrent for users not entitled to access, with immediate relocation of the arm in the closure position directly after the passage of the user, by way of the installation of the gearmotor.

In particular, the provision of the safety wing, which by rotating in one direction or the other increases the passage surface, allows the application of the barrier in narrow corridors, such as for example those inside buses and trams, ensuring the safety of users in case of panic and most of all facilitating exit in case of emergency situations.

Further, the possibility to control the rotation speed of the wing allows installation technicians to provide adequate control over passengers who do not have travel clearance.

Another advantage is constituted by the provision of the movement means with an electromagnet which ensures rapid movement of the arm to remove the barrier, which is effective in emergency situations, and safer access control without risks for users.

Another advantage is due to the provision of the safety wing with emergency means which allow to secure the entire device, making it suitable for installation in crowded spaces.

The combination of these advantageous aspects ensures rapid access of one and only one person at a time, and the retraction of the safety wing allows passage also to users with walking problems, quadriplegics, handicapped people, or people with bulky baggage.

Not least, the use of commonly used materials and the easy assembly of the device, as well as its small dimensions, make it a commercially competitive product.

In practice it has been found that the device according to the invention thus described allows to provide a barrier for controlling the access of one person at a time, mainly for means of public transportation, ensuring the safety of the means of transportation on which it is installed and rapid access of users, even those with walking problems, large-bodied users or users carrying baggage.

The invention thus conceived is susceptible of numerous modifications and variations, all of which are within the scope of the appended claims.

All the details may further be replaced with other technically equivalent elements.

In practice, the materials used, as well as the dimensions, may be any according to requirements, so long as they are consistent with the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A control barrier (1) for the access of one user at a time, mainly for means of public transportation such as buses, trams and the like, comprising a body (2) for supporting a control arm (10) for access to said barrier (1) which is pivoted on said supporting body (2) and is connected to movement means (12,13,14,131,132,133, 134,135) for the barrier (1) between a closed position with the control arm (10) protruding almost completely from the supporting body (2) and an open position in which said control arm (10) is contained inside the supporting body (2), the control barrier (1) further comprising a safety wing (20) allowing the opening of the barrier (1) in case of a dangerous situation, which is connected to said control arm (10) by way of means (21,22) for rotation of said safety wing (20) with respect to said control arm (10) in both directions about a substantially vertical axis, said rotation means (21,22) being controlled by means (23,24,25,26,27,261,271) for controlling the rotation speed of said safety wing (20) which intervene if the thrust applied to the wing (20) is lower than a preset threshold limit.

2. The barrier (1) according to claim 1, **characterized in that** said means for controlling the rotation speed comprise a slider (23) arranged inside a cylinder (26) and means (25,27,221,261,271) for actuating the translational back-and-forth motion with respect to an initial position, said slider (23) being provided with means (24) for preventing rotation.

3. The barrier (1) according to claim 2, **characterized in that** said actuation means comprise a pivot (25) which is supported by said slider (23) and protrudes from a slot (261) formed on said cylinder (26) and engages slidingly, by means of an elastic actuator (27) connected to said slider (23), on a track (261) that is formed on a tubular element (22) that is jointly associated with said safety wing (20) and for engagement for a pair of pivots (21) that are fixed on said control arm (10).

4. The barrier (1) according to claim 3, **characterized in that** said elastic actuator is constituted by a fluid-operated spring (27), which is arranged inside said cylinder (26) and is connected to a device for the transfer of gas.

5. The barrier (1) according to claim 4, **characterized in that** said means for preventing rotation comprise at least one pin (24) that is jointly connected to a fixed surface of said control arm (10).

6. The barrier (1) according to claim 5, **characterized in that** it comprises emergency means (30,31,32) for said means for controlling the rotation speed.

7. The barrier (1) according to claim 6, **characterized in that** said emergency means comprise an eccentric disk (31), which supports said fluid-operated spring (27) in conditions of normal operation and is connected to motor means (32) that are pivoted to said control arm (10), said motor means (32) being detachably engaged with said control arm (10) by way of retention means (30).

8. The barrier (1) according to claim 7, **characterized in that** said retention means comprise a second electromagnet (30), which is fixed on said control arm (10) for engaging said motor means (32).

9. The barrier (1) according to claim 8, **characterized in that** it comprises deactivation means (5) for said second electromagnet (30).

10. The barrier (1) according to one or more of the preceding claims, **characterized in that** said movement means comprise a toggle (13), which is constituted by at least two levers (131,132) which mutually oscillate by way of a first pivot (133), said toggle (13) being connected at one end to said supporting body (2) by means of a second pivot (135) and at the other end to said control arm (10) by means of a third pivot (134), said movement means further comprising a first electromagnet (12), which retains said at least two levers (131,132) so that they are substantially mutually aligned in the position in which the barrier (1) is closed.

11. The barrier (1) according to claim 10, **characterized in that** it comprises means (14) for returning said toggle to the position in which the barrier (1) is opened, said means (14) being connected to said supporting body (2).

12. The barrier (1) according to claim 11, **characterized in that** said return means are constituted by a traction spring (14), which is fixed to said supporting body (2) at one end and to said first pivot (133) at the other end.

13. The barrier (1) according to claim 12, **characterized in that** it comprises validation means that actuate the deactivation of said first electromagnet (12).

14. The barrier (1) according to claim 13, **characterized in that** it comprises repositioning means (7) for said control arm (10) in the position in which the barrier (1) is closed.

15. The barrier (1) according to claim 14, **characterized in that** said repositioning means comprise a gearmotor (7), which is jointly connected to said supporting body (2) and act on said toggle (13).

## Patentansprüche

1. Kontrollschranke (1) für den Zugang von jeweils einem Nutzer gleichzeitig, hauptsächlich für öffentliche Verkehrsmittel wie Busse, Straßenbahnen und ähnliche, umfassend einen Körper (2) zur Stützung eines Kontrollarmes (10) für den Zugang zu der Schranke (1), welcher drehbar an dem Stützkörper (2) gelagert ist und mit Bewegungsmittel (12, 13 ,14, 131, 132, 133, 134, 135) für die Schranke (1) verbunden ist, mittels welcher die Schranke (1) zwischen einer geschlossenen Position, in welcher der Kontrollarm (10) fast vollständig aus dem Stützkörper (2) hervorragt, und einer offenen Position, in welcher der Kontrollarm (10) in dem Stützkörper (2) enthalten ist, wobei die Kontrollschranke (1) ferner einen Sicherheitsriegel (20) umfasst, welcher im Falle einer gefährlichen Situation ermöglicht die Schranke (1) zu öffnen, welcher mit dem Kontrollarm (10) über Mittel (21, 22) zur Rotation des Sicherheitsriegels (20) bezüglich des Kontrollarmes (10) in beide Richtungen um eine im Wesentlichen vertikale Achse verbunden ist, wobei die Rotationsmittel (21, 22) von Mitteln (23, 24, 25, 26, 27, 261, 271) zum Steuern der Rotationsgeschwindigkeit des Sicherheitsriegels (20) gesteuert werden, welche eingreifen, wenn der angewendete Druck auf den Riegel (20) niedriger als ein voreingestellter Schwellenwert ist.

2. Schranke (1) nach Anspruch 1, **dadurch gekennzeichnet, dass** die Mittel zum Steuern der Rotationsgeschwindigkeit einen Schieber (23), der innerhalb eines Zylinders (26) angeordnet ist, und Mittel (25, 27, 221, 261, 271) zum Ausführen der translatorischen vor-und-zurück Bewegung bezüglich einer anfänglichen Position umfassen, wobei der Schieber (23) mit Mitteln (24) zum Verhindern von Rotation ausgestattet ist.

3. Schranke (1) nach Anspruch 2, **dadurch gekennzeichnet, dass** die Ausführmittel einen Drehpunkt (25) umfassen, welcher von dem Schieber (23) gestützt wird und aus einem Schlitz (261) hervorragt, der in dem Zylinder (26) geformt ist und gleitend auf einer Schiene (261) mittels eines elastischen Aktuators (27), welcher mit dem Schieber (23) verbunden ist, eingesetzt ist, wobei die Schiene (261) auf einem rohrförmigen Element (22) geformt ist, welches gelenkig mit dem Sicherheitsriegel (20) verbunden ist, und für eine Verbindung eines Paars von Drehpunkten (21) ausgestaltet ist, welches auf dem Kontrollarm (10) befestigt ist.

4. Schranke (1) nach Anspruch 3, **dadurch gekennzeichnet, dass** der elastische Aktuator von einer Fluid-betriebenen Feder (27), welche innerhalb des Zylinders (26) angeordnet ist, und welche mit einem Gerät für Gastransfer verbunden ist, gebildet wird.

5. Schranke (1) nach Anspruch 4, **dadurch gekennzeichnet, dass** die Mittel zum Verhindern von Rotation zumindest einen Stift (24), welcher gelenkig mit einer festen Fläche des Kontrollarms (10) verbunden ist, umfassen.

6. Schranke (1) nach Anspruch 5, **dadurch gekennzeichnet, dass** sie Notmittel (30, 31, 32) für die Mittel, welche die Rotationsgeschwindigkeit steuern, umfasst.

7. Schranke (1) nach Anspruch 6, **dadurch gekennzeichnet, dass** die Notmittel eine Exzenterscheibe (31) umfassen, welche die Fluid-betriebene Feder (27) unter Bedingungen normalen Betriebs unterstützt, und welche mit Antriebsmitteln (32) verbunden ist, die drehbar an dem Kontrollarm (10) gelagert sind, wobei die Antriebsmittel (32) abnehmbar in den Kontrollarm (10) über Rückhaltemittel (30) eingreifen.

8. Schranke (1) nach Anspruch 7, **dadurch gekennzeichnet, dass** die Rückhaltemittel einen zweiten Elektromagneten (30) umfassen, welcher an dem Kontrollarm (10) zum Eingreifen in die Antriebsmittel (32) befestigt ist.

9. Schranke (1) nach Anspruch 8, **dadurch gekennzeichnet, dass** sie Deaktivierungsmittel für den zweiten Elektromagneten (30) umfasst.

10. Schranke (1) nach einem oder mehreren der vorhergehenden Ansprüche, **dadurch gekennzeichnet, dass** die Bewegungsmittel einen Umschalter (13) umfassen, welcher aus zumindest zwei Hebeln (131, 132) besteht, welche über einen ersten Drehpunkt (133) wechselseitig schwingen, wobei der Umschalter (13) an einem Ende mit dem Stützkörper (2) über einen zweiten Drehpunkt (135) und am anderen Ende mit dem Kontrollarm (10) über einen dritten Drehpunkt (134) verbunden sind, wobei die Bewegungsmittel ferner einen ersten Elektromagneten (12) umfassen, welcher die zumindest zwei Hebel (131, 132) fixiert, so dass sie im Wesentlichen gegenseitig in der geschlossenen Position der Schranke (1) ausgerichtet sind.

11. Schranke (1) nach Anspruch 10, **dadurch gekennzeichnet, dass** sie Mittel (14) zum Zurückbringen des Umschalters in die Position, in welcher die Schranke (1) offen ist, wobei die Mittel (14) mit dem Stützkörper (2) verbunden sind, umfasst.

12. Schranke (1) nach Anspruch 11, **dadurch gekennzeichnet, dass** die Zurückbringmittel von einer Zugfeder (14) gebildet werden, welche an einem Ende an dem Stützkörper (2) und am anderen Ende an dem ersten Drehpunkt (133) befestigt ist.

13. Schranke (1) nach Anspruch 12, **dadurch gekennzeichnet, dass** sie Überprüfungsmittels umfasst, welche die Deaktivierung des ersten Elektromagneten (12) ausführen.

14. Schranke (1) nach Anspruch 13, **dadurch gekennzeichnet, dass** sie Umpositionierungsmittel (7) für den Kontrollarm (10) in die Position, in welcher die Schranke (1) geschlossen ist, umfasst.

15. Schranke (1) nach Anspruch 14, **dadurch gekennzeichnet, dass** die Umpositionierungsmittel einen Getriebemotor (7), welcher gelenkig mit dem Stützkörper (2) verbunden ist und auf den Umschalter (13) einwirkt, umfassen.

## Revendications

1. Barrière de commande (1) pour l'accès d'un utilisateur à la fois, principalement pour des moyens de transport en commun tels que des bus, des tramways et similaires, comprenant un corps (2) de support d'un bras de commande (10) pour un accès à ladite barrière (1) qui pivote sur ledit corps de support (2) et est raccordé à des moyens de mouvement (12, 13, 14, 131, 132, 133, 134, 135) pour la barrière (1) entre une position fermée avec le bras de commande (10) qui dépasse quasiment totalement du corps de support (2) et une position ouverte dans laquelle ledit bras de commande (10) est contenu à l'intérieur du corps de support (2), la barrière de commande (1) comprenant en outre un battant de sécurité (20) permettant l'ouverture de la barrière (1) en cas de situation dangereuse, qui est raccordé audit bras de commande (10) par des moyens (21, 22) de rotation dudit battant de sécurité (20) par rapport audit bras de commande (10) dans les deux directions autour d'un axe sensiblement vertical, lesdits moyens de rotation (21, 22) étant commandés par des moyens (23, 24, 25, 26, 27, 261, 271) de commande de la vitesse de rotation dudit battant de sécurité (20) qui interviennent si la poussée appliquée au battant (20) est inférieure à une limite seuil préétablie.

2. Barrière (1) selon la revendication 1, **caractérisée en ce que** lesdits moyens de commande de la vitesse de rotation comprennent un coulisseau (23) ménagé à l'intérieur d'un cylindre (26) et des moyens (25, 27, 221, 261, 271) d'actionnement du mouvement de translation de va-et-vient par rapport à une position initiale, ledit coulisseau (23) étant muni de moyens (24) antirotation.

3. Barrière (1) selon la revendication 2, **caractérisée en ce que** lesdits moyens d'actionnement comprennent un pivot (25) qui est supporté par ledit coulisseau (23) et dépasse d'une gorge (261) formée sur ledit cylindre (26) et se met en prise en coulissement, au moyen d'un actionneur élastique (27) raccordé audit coulisseau (23), sur un rail (261) qui est formé sur un élément tubulaire (22) qui est associé conjointement audit battant de sécurité (20) et pour une mise en prise d'une paire de pivots (21) qui sont fixés sur ledit bras de commande (10).

4. Barrière (1) selon la revendication 3, **caractérisée en ce que** ledit actionneur élastique est constitué d'un ressort actionné par fluide (27), qui est ménagé à l'intérieur dudit cylindre (26) et est raccordé à un dispositif pour le transfert de gaz.

5. Barrière (1) selon la revendication 4, **caractérisée en ce que** lesdits moyens antirotation comprennent au moins une clavette (24) qui est raccordée conjointement à une surface fixe dudit bras de commande (10).

6. Barrière (1) selon la revendication 5, **caractérisée en ce qu'**elle comprend des moyens d'urgence (30, 31, 32) pour lesdits moyens de commande de la vitesse de rotation.

7. Barrière (1) selon la revendication 6, **caractérisée en ce que** lesdits moyens d'urgence comprennent un disque excentrique (31), qui supporte ledit ressort actionné par fluide (27) dans des conditions de fonctionnement normal et est raccordé à des moyens de moteur (32) qui pivotent sur ledit bras de commande (10), lesdits moyens de moteur (32) étant mis en prise de façon détachable avec ledit bras de commande (10) par des moyens de retenue (30).

8. Barrière (1) selon la revendication 7, **caractérisée en ce que** lesdits moyens de retenue comprennent un second électroaimant (30), qui est fixé sur ledit bras de commande (10) pour mettre en prise lesdits moyens de moteur (32).

9. Barrière (1) selon la revendication 8, **caractérisée en ce qu'**elle comprend des moyens de désactivation (5) pour ledit second électroaimant (30).

10. Barrière (1) selon une ou plusieurs des revendications précédentes, **caractérisée en ce que** lesdits moyens de mouvement comprennent une articulation (13), qui est constituée d'au moins deux leviers (131, 132) qui oscillent mutuellement au moyen d'un premier pivot (133), ladite articulation (13) étant raccordée au niveau d'une extrémité audit corps de support (2) au moyen d'un deuxième pivot (135) et au niveau de l'autre extrémité dudit bras de commande (10) au moyen d'un troisième pivot (134), lesdits moyens de mouvement comprenant en outre un premier électroaimant (12) qui retient lesdits au moins deux leviers (131, 132) de sorte qu'ils soient alignés sensiblement mutuellement dans la position dans laquelle la barrière (1) est fermée.

11. Barrière (1) selon la revendication 10, **caractérisée en ce qu'**elle comprend des moyens (14) de renvoi de ladite articulation dans la position dans laquelle la barrière (1) est ouverte, lesdits moyens (14) étant raccordés audit corps de support (2).

12. Barrière (1) selon la revendication 11, **caractérisée en ce que** lesdits moyens de renvoi sont constitués d'un ressort de traction (14), qui est fixé audit corps de support (2) au niveau d'une extrémité et audit premier pivot (133) au niveau de l'autre extrémité.

13. Barrière (1) selon la revendication 12, **caractérisée en ce qu'**elle comprend des moyens de validation qui actionnent la désactivation dudit premier électroaimant (12).

14. Barrière (1) selon la revendication 13, **caractérisée en ce qu'**elle comprend des moyens de repositionnement (7) dudit bras de commande (10) dans la position dans laquelle la barrière (1) est fermée.

15. Barrière (1) selon la revendication 14, **caractérisée en ce que** lesdits moyens de repositionnement comprennent un moteur à engrenage (7), qui est raccordé conjointement audit corps de support (2) et agissent sur ladite articulation (13).
